(19) **Europäisches Patentamt**
**European Patent Office**
**Office européen des brevets**

(11) **EP 1 716 557 B1**

(12) **EUROPEAN PATENT SPECIFICATION**

(45) Date of publication and mention
of the grant of the patent:
**19.05.2010 Bulletin 2010/20**

(51) Int Cl.:
**G09G 3/36** (2006.01)

(21) Application number: **05707913.9**

(86) International application number:
**PCT/EP2005/050439**

(22) Date of filing: **01.02.2005**

(87) International publication number:
**WO 2005/078695 (25.08.2005 Gazette 2005/34)**

(54) **DISPLAY DEVICE WITH LCOS LIGHT VALVE OF REDUCED SIZE**

ANZEIGEEINRICHTUNG MIT LCOS-LICHTVENTIL VERRINGERTER GRÖSSE

DISPOSITIF D'AFFICHAGE PRESENTANT UNE VANNE LCOS DE TAILLE REDUITE

(84) Designated Contracting States:
**DE FR GB**

(30) Priority: **18.02.2004 FR 0401636**

(43) Date of publication of application:
**02.11.2006 Bulletin 2006/44**

(73) Proprietor: **Thomson Licensing**
**92443 Issy-les-Moulineaux Cedex (FR)**

(72) Inventors:
• **MORVAN, Patrick**
 **F-35890 Laille (FR)**

• **RIO, Philippe**
 **F-35000 Rennes (FR)**
• **FRITSCH, Maurice**
 **F-35000 Rennes (FR)**
• **DOYEN, Didier**
 **F-35340 La Bouexiere (FR)**

(74) Representative: **Le Dantec, Claude**
**Thomson**
**1, rue Jeanne d'Arc**
**92443 Issy-les-Moulineaux Cedex (FR)**

(56) References cited:
**EP-A- 0 631 271     EP-A- 1 207 513**
**US-A1- 2003 030 609     US-A1- 2003 090 448**

**Description**

The present invention relates to a display device of front or rear projector type comprising an LCOS (Liquid Crystal On Silicon) type valve.

It will be described within the framework of a sequential colour display although it may be applied to a monochrome display.

A conventional LCOS valve is an array of elements arranged in rows and columns, each element being intended to display an image pixel. Currently, the architecture of an LCOS valve may be of two types:

- an architecture without pixel memory in which the images received are directly displayed; each valve element comprises a transistor controlling a liquid crystal; the size of the valve is then reduced but it is not possible to address a valve element and to illuminate another element of the valve simultaneously; in a sequential colour display system using a colour wheel, the wheel must then comprise a black segment between each colour segment, thereby greatly reducing the luminous efficiency of the system.

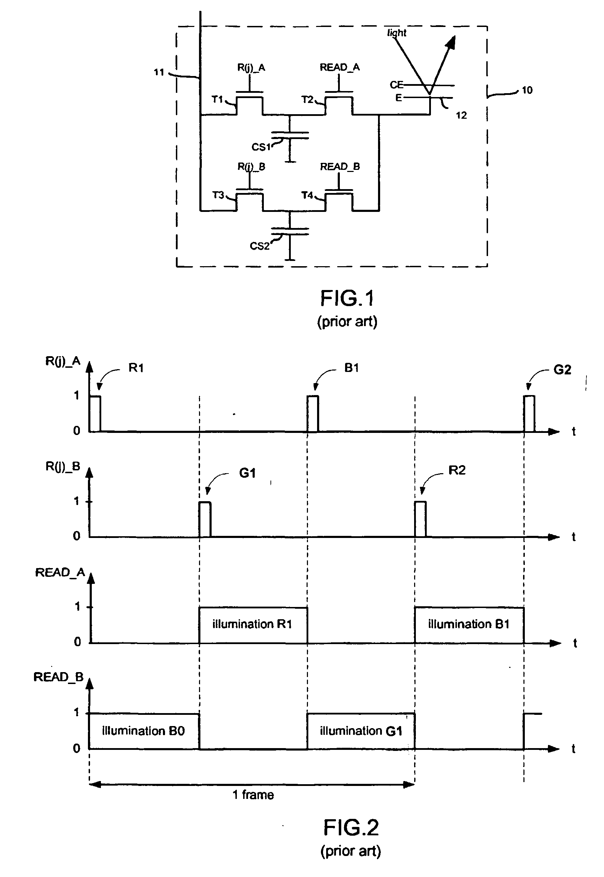

- an architecture with pixel memory such as described in US patent 6 476 785; Figure 1 represents the functional diagram of a valve element of this type; this element, referenced 10, is capable of storing an item of video information before displaying it; it does not have the drawbacks of the previous architecture in the case of sequential colour display but, however, occupies a significant size on silicon; the present invention is more particularly concerned with this type of architecture.

With reference to Figure 1, the element 10 is linked to a column line 11 of the valve to which are applied voltages representative of successive video levels to be displayed by the element as well as by the other elements of the valve belonging to the same column of elements. The element 10 comprises a liquid crystal 12 which reflects a quantity of light (provided by an external light source contained in the projector) proportional to the voltage applied to its input electrodes. The liquid crystal 12 conventionally comprises two electrodes. The first, commonly called the mirror electrode and denoted E in figure 1, receives the video voltage for the element 10. The second, denoted CE and called the counter-electrode, is held at a fixed or variable potential. The potential difference within the liquid crystal modulates the light reflected or transmitted by the liquid crystal. A drive circuit is inserted between the column line 11 and the mirror electrode of the liquid crystal 12. It comprises two storage capacitors CS1 and CS2 provided for storing voltage levels present on the column line 11 at different instants. Thus, while a voltage level applied to the column line 11 is stored in one of said capacitors, the voltage level stored in the other capacitor is applied to the mirror electrode of the liquid crystal 12. It is therefore possible to store a video level during the display of another level. The drive circuit more particularly comprises transistors T1, T2, T3 and T4 for connecting the storage capacitors CS1 and CS2 either to the column line 11, or to the mirror electrode of the liquid crystal 12. The transistor T1 is connected between the column line 11 and a first terminal of the capacitor CS1, the other terminal of the capacitor CS1 being connected to ground or to a low fixed potential. The transistor T1 is driven by the signal R(j)_A, j being the number of the row to which the element considered belongs. The transistor T2 is connected between the first terminal of the capacitor CS1 and the mirror electrode of the liquid crystal 12 and is driven by the signal READ_A. The transistor T3 is connected between the column line 11 and a first terminal of the capacitor CS2, the other terminal of the capacitor CS2 being connected to ground or to a low fixed potential. It is commanded by the signal R(j)_B. Finally, the transistor T4 is connected between the first terminal of the capacitor CS2 and the mirror electrode of the liquid crystal 12 and is driven by the signal READ_B.

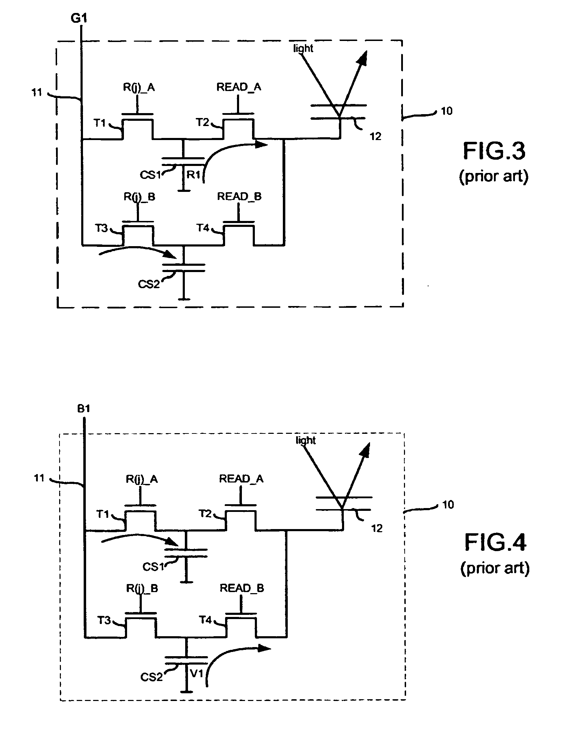

The operation mode of this valve element is illustrated by Figures 2 to 4 in the case of a sequential colour display during a frame. Video information Ri (for the red colour), Gi (for the green colour) and Bi (for the colour blue) referring to an image i are provided sequentially on the column line 11. Represented in Figure 2 are time charts showing the state of the transistors during writing to the element 10 and/or the illumination by the latter of the information B0, R1, G1, B1, B2 and G2 transmitted in this order on the column line 11 at regular intervals. Information (not represented) referring to other elements of the column is transmitted during these intervals. In a first phase of operation, when the information item R1 is present on the column line 11, the transistor T1 is turned on (R(j)_A=1) so as to store R1 in the capacitor CS1. Simultaneously, the transistor T4 (READ_B=1) is turned on so as to display the information item B0 stored previously in the capacitor CS2. Although the transistor T1 is quickly turned off again, the transistor T4 remains conducting until the information item G1 is present on the column line 11. The transistor T3 then turns on (R(j)_B=1) so as to store the information item G1 in the capacitor CS2. Simultaneously, the transistor T2 becomes conducting (READ_A=1) so that the liquid crystal 12 receives on its mirror electrode the information item R1 previously stored in the capacitor CS1. The transistor T2 remains conducting until the information item B1 appears on the column line 11. The transistor T then becomes conducting again so as to store the information item B1 in the capacitor CS1 and the above is repeated immediately. Figure 3 illustrates the operation phase corresponding to the storing of the information item G1 and to the displaying of the information item R1 and Figure 4 illustrates the operation phase corresponding to the storing of the information item B1 and to the displaying of the information item G1.

As mentioned previously, this architecture allows each element of the valve to receive and display simultaneously different video levels. Its main drawback is the large number of transistors in the drive circuit of the elements. The size of the drive circuit of each element of the valve is therefore large, this being prejudicial to the overall size of the valve.

Further image display devices are also disclosed in US-A-2003/0 030 609, EP-A-0 631 271, EP-A-1 207 513, and US-A-2003/0 090 448.

Currently, with a 0.35 $\mu$m CMOS technology supporting voltage levels of the order of 3 to 5 volts necessary for the driving of the liquid crystals of the valve, the dimensions of each valve element are 12 $\mu$m x 12 $\mu$m. In the case of a high-definition image (1920x1080), this represents a diagonal of 1.05 inches.

An object of the invention is to propose a new architecture of valve for reducing the dimensions of the latter and decreasing its manufacturing cost.

According to the invention, it is proposed to reduce the number of transistors and of capacitors in the drive circuit of the liquid crystals by sharing some of them in common between several elements of the valve.

The present invention relates to an image display device comprising:

- a valve of elements arranged in rows and columns, each of said elements comprising a liquid crystal one of whose electrodes, called the mirror electrode, is controlled by drive means so as to display video information relating to at least one image,
- means for coding, for each image, the video information intended to be displayed by each of the elements of the valve as a common value shared by a group of at least two adjacent elements of the valve and a specific value, and for transmitting them to said valve,
  the drive means consisting of:

- for each element of the valve, a specific drive means coupled to the mirror electrode of the liquid crystal of said element and intended to store the specific value associated with the video information item to be displayed by said element and to apply it to the mirror electrode of the liquid crystal of said element and
- for each group of at least two elements of the valve, a common drive means coupled to each element of said group and intended to store said common value associated with the video information item to be displayed by said elements of the group and to apply it to the mirror electrode of the liquid crystals of the elements of said group,
  the specific drive means and the common drive means that are coupled to one and the same group of elements controlling the liquid crystals of the elements of the group in such a way as to alternately display the specific values and the common value of the video information relating to the elements of the group for an image.

In the case of a sequential colour display with at least two colours, the specific drive means and the common drive means that are coupled to one and the same group of elements control the liquid crystals of the elements of the group in such a way as to alternately display the specific values of the video information relating to a colour and the common values of the video information relating to said colour or to another colour.

In the case of a sequential colour display, the device then comprises for example:

- a light source for producing white light and illuminating said valve of elements, said valve reflecting or allowing through a quantity of light as a function of the specific and common values that are transmitted to it by the coding means, and
- a colour wheel, interposed between said light source and said valve, comprising a colour segment for each of said at least two colours, said wheel being synchronized with the coding means so that, when specific or common values relating to a colour are applied to the mirror electrodes of the liquid crystals of the valve, the wheel segment corresponding to said colour filters the light produced by the source.

According to the invention, the adjacent elements of a group of elements may belong either to one and the same column of elements of the valve and to consecutive rows, or to consecutive rows and consecutive columns of elements of the valve.

According to the invention the specific drive means of an element comprises:

- a first storage capacitor for storing the specific values present on a column line of the valve and intended for said element,
- a first switch for connecting the column line to a first end of said first storage capacitor, the other end being connected to a fixed potential, and
- a second switch for connecting the first end of the first storage capacitor to the mirror electrode of the liquid crystal of the element.

The common drive means of a group of elements of the valve comprises:

- a second storage capacitor for storing the common value present on the column line of the valve and intended for said group,
- a third switch for connecting the column line to a first end of the second storage capacitor, the other end being connected to a fixed potential, and
- fourth switchs for connecting the first end of the second storage capacitor to the mirror electrodes of the liquid crystals of the elements of the group.

The invention will be better understood on reading the description which follows, given by way of nonlimiting example, and with reference to the appended figures among which:

- Figure 1 represents the diagram of a valve element, with pixel memory, of the prior art,
- Figure 2 represents the time charts of the drive signals of the transistors of the element of Figure 1,
- Figures 3 and 4 illustrate two operation phases of the element of Figure 1,
- Figure 5 represents the diagram of a pair of elements of the valve according to a first embodiment of the invention;
- Figure 6 illustrates the sequencing of the video information displayed by a valve according to the invention in the case of a sequential colour display,
- Figure 7 represents the diagram of four valve elements according to a second embodiment of the invention;
- Figure 8 represents a second sequencing of the video information displayed by a valve according to the invention in the case of a sequential colour display, and
- Figure 9 represents a device in accordance with the invention.

According to the invention, there is proposed a new architecture of valve elements making it possible to reduce the number of transistors and of capacitors in the valve. According to this architecture, transistors and capacitors are used in common by several elements of the valve to drive the liquid crystals of these elements. It is more particularly proposed that a single transistor T3 and a single capacitor CS2 be used in each group of at least two elements of the valve. Various embodiments are proposed to illustrate this principle.

This architecture requires the use of a particular coding of the video information and of a particular address of the video information coded in the valve. This particular coding consists in decomposing the video information of each image pixel into two parts: a value common to a group of at least two adjacent pixels and a value specific to each pixel. In order for the common values and the specific values to be displayed during one and the same video frame, the frequency of addressing of the elements of the valve is multiplied by two with respect to a conventional sequential colour display (180 Hz). According to the invention, the common value shared by a group of pixels is stored in the capacitor CS2 of the group of at least two valve elements charged with displaying said group of at least two pixels and the specific value of each pixel is stored in the capacitor CS1 of the valve element charged with displaying this pixel. According to the invention and within the framework of a sequential colour display of an image, the common values and the specific values for a given colour are transmitted sequentially to the valve alternating, for said image, the transmission of the common values for a given colour and the transmission of the specific values for the same colour or another colour. Within the framework of a monochrome display, the specific values for one and the same image are transmitted one after the other during a first part of the video frame and the common values during the other part of the frame.

Several valve architectures in accordance with the invention are proposed.

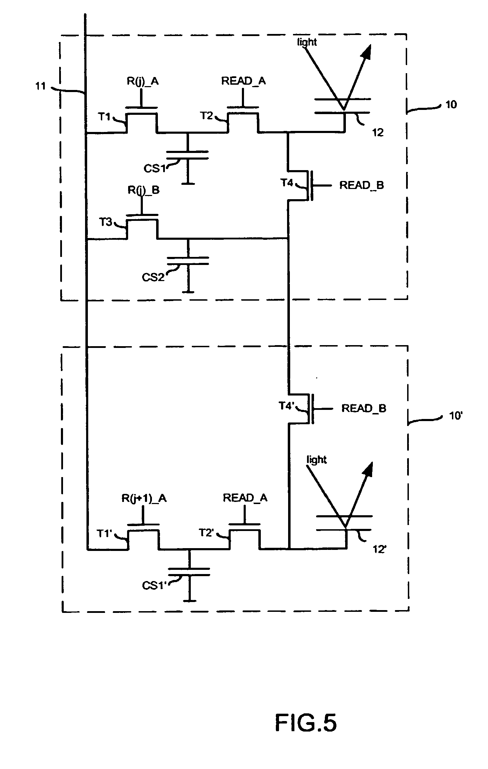

A first embodiment is proposed in Figure 5.

Figure 5 represents two adjacent valve elements 10 and 10' belonging to one and the same column of elements but to two consecutive rows j and j+1 of the valve. The element 10 is equivalent to the element 10 of Figure 1. The element 10' comprises the same components as the element 10 with the exception of the capacitor CS2 and of the transistor T3. The components T1, T2, T4, CS1 and 12 of the element 10 are designated by the references T1', T2', T4', CS1' and 12' in the element 10'. The transistor T1' is driven by the signal R(j+1)_A and the other transistors of the element 10' are driven by the same signals as in the element 10. The position of the transistor T4 (and of the corresponding transistor T4') is modified with respect to Figure 1. The transistor T4 is mounted in series with the transistor T4' between the mirror electrodes of the liquid crystals 12 and 12' and the terminal of the capacitor CS2 connected to the transistor T3 is linked to a point situated between the two transistors T4 and T4'. The capacitor CS2 serves to store common information shared by the two elements 10 and 10'.

The particular coding to be used to operate these elements is described hereinafter. This coding is identical to that already defined in French patent FR 2 841 366. This coding has been defined so as to decrease the addressing time for the elements of the valve when the display frequency is increased. It is used, in this application, to code video information which is displayed with conventional valve elements, with or without pixel memory. The coding to be employed with the valve elements of Figure 5 is described hereinafter through an example. Let us consider the case of a pixel P1 having, for a given colour (red, green or blue) a video level $NG_1$ equal to 150 and a pixel P2 having a video level $NG_2$ equal to 100. These two pixels are to be displayed by the two elements 10 and 10'. These two pixels therefore belong to a given column of pixels of the image and to two consecutive rows of pixels j and j+1 of the image.

The video levels $NG_1$ and $NG_2$ are decomposed into a common value VC shared by the two pixels P1 and P2 and two specific values $VS_1$ and $VS_2$, one for each pixel, such that $NG_1 = \dfrac{VC + VS_1}{2}$ and $NG_2 = \dfrac{VC + VS_2}{2}$.

It is possible to take $VC = \dfrac{NG_1 + NG_2}{2}$ i.e. 125 in the present case. The specific values VS1 and VS2 are then equal to 175 and 75. This example is summarized by Table 1 below.

Table 1

| Row number | Starting value NG; | Common value VC | Specific value VS; | Mean output value |
|---|---|---|---|---|
| j | 150 | 125 | 175 | 150 |
| J+1 | 100 | 125 | 75 | 100 |

When, for a given pixel the specific value is displayed after the common value or vice versa, the value of grey level perceived by the human eye is the mean value, i.e. 150 for pixel P1 and 100 for pixel P2, this corresponding to the video levels $NG_1$ and $NG_2$ to be displayed. Of course, the specific value may be displayed before the common value VC or vice versa.

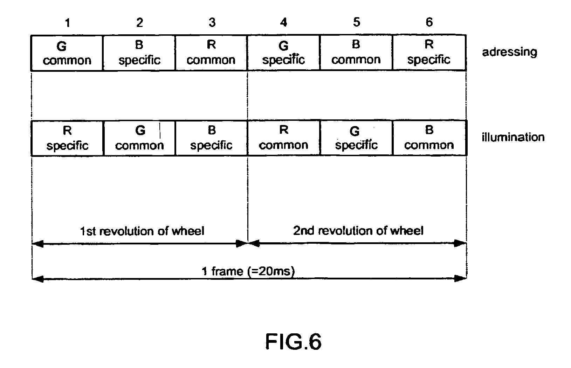

According to the invention, the specific values of the pixels of the image for each colour are provided alternating with the common values corresponding to the valve. These values are for example transmitted as illustrated in the Figure 6. The video frame of duration T is divided into 6 fields (of duration T/6) each assigned to a colour and numbered from 1 to 6. The common values of each colour are displayed during fields 2, 4 and 6 of the frame and the specific values during fields 1, 3 and 5, each field being assigned to a particular colour. In the example of Figure 6, fields 1 and 4 of the frame are assigned to the green colour, fields 2 and 5 to the colour blue and fields 3 and 6 to the red colour. These values are stored, as and when they appear on the column line 11, in the capacitors CS1 and CS2 of the elements of the valve. These values are displayed with a time shift corresponding to a field with respect to the addressing, as illustrated by Figure 6. If the projector uses a colour wheel with three colour segments - red, green, blue - the latter performs two revolutions during a frame.

If the sequencing of Figure 6 is followed, the operation mode of the elements 10 and 10' of Figure 5 is the following. During field 1 of the frame, a common value VC shared by the two elements for the green colour is stored in the capacitor CS2 and the specific values VS1 and VS2 stored previously in the capacitors CS1 and CS1' are displayed by the liquid crystals 12 and 12'. Accordingly, the transistor T3 is turned on when the value VC is present on the column 11 during this field. The transistors T2 and T2' are turned on during the whole of this field whereas the other transistors remain off during this field.

During field 2, the common value VC stored in the capacitor CS2 is displayed by the liquid crystals 12 and 12'. The transistors T4 and T4' are therefore conducting during the whole of this field. The specific values VS1 and VS2 for the colour blue are stored respectively in the capacitors CS1 and CS1'. The transistors T1 and T1' are therefore turned on when the values VS1 and VS2 are present on the column 11 during this field. The other transistors, T2 and T2', are off.

In the same manner, during field 3, the common value for the red colour is stored in the capacitor CS2 and the specific values for the colour blue are displayed. During field 4, the specific values for the green colour are stored in the capacitors CS1 and CS1' and the common value for the red colour is displayed. During field 5, the common value for the colour blue is stored in the capacitor CS2 and the specific values for the green colour are displayed. Finally, during field 6, the specific values for the red colour are stored in the capacitors CS1 and CS1' and the common value for the colour blue is displayed.

In this architecture where the elements of the valve are grouping together in groups of 2, the single capacitor CS2 is used to store the common values VC shared by the two elements and the two capacitors CS1 and CS1' are used to store the specific values VS1 and VS2. This architecture makes it possible to dispense with a transistor and a capacitor for each group of two elements of the valve.

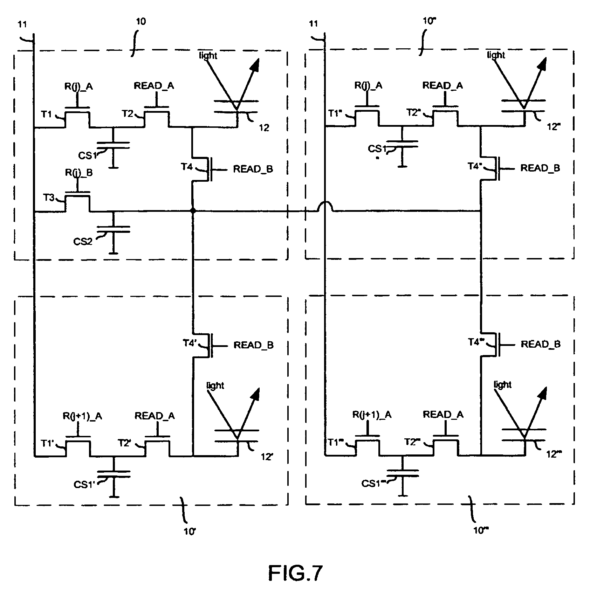

It is also possible to save a bigger number of transistors and capacitors. It is then sufficient to use common values which are common to a larger number of elements, for example to four elements, as illustrated hereinafter. Figure 7 shows four adjacent valve elements 10, 10', 10", 10''' in accordance with the invention. These four elements belong to two consecutive columns i and i+1 and two consecutive rows j and j+1 of the valve. The components X in the element 10 are denoted X' in the element 10', X" in the element 10" and X''' in the element 10'''. The element 10 is identical to the element 10 in Figure 5 and the elements 10', 10", 10''' are identical to the element 10' in Figure 5. The elements 10', 10" and 10''' therefore comprise neither any capacitor CS2, nor a transistor 33. The transistors T1 and T1" are driven by the signal R(j)_A and the transistors T1' and T1''' are driven by the signal R(j+1)_A. The other transistors are driven by the same signals as those of the element 10. In this diagram, the capacitor CS2 is used in common by the four adjacent elements 10, 10', 10" and 10'''. It serves to store the common values shared by these four elements.

The particular coding to be used to operate these elements is given hereinafter through an example. Let us consider the case of four image pixels P1, P2, P3 and P4 having respectively, for a given colour (red, green or blue), video levels $NG_1$=150, $NG_2$=130, $NG_3$=120 and $NG_4$=100 and to be displayed by the elements 10, 10', 10" and 10'''.

The video levels $NG_1$, $NG_2$, $NG_3$ and $NG_4$ are decomposed into a common value VC shared by the four pixels and four specific values $VS_1$, $VS_2$, $VS_3$ and $VS_4$ for each of the four pixels. The common value VC is, for example, the mean value of the four input grey levels. These values are defined in Table 2 below.

Table 2

| (column, row) | Starting value $NG_l$ | Common value VC | Specific value $VS_i$ | Mean output value |
|---|---|---|---|---|
| (i,j) | 150 | 125 | 175 | 150 |
| (i+1,j) | 130 | 125 | 135 | 130 |
| (i,j+1) | 120 | 125 | 115 | 120 |
| (i+1,j+1) | 100 | 125 | 75 | 100 |

Thus, when, for a given pixel, the specific value and the corresponding common value are displayed sequentially, the value of grey level perceived by the human eye is the mean value, which corresponds to the video levels $NG_1$, $NG_2$, $NG_3$ and $NG_4$ which are to be displayed.

These coded values are transmitted and displayed by the elements 10, 10', 10" and 10''' as shown in Figure 6.

In this architecture, the single capacitor CS2 is common to four valve elements. This architecture therefore makes it possible to dispense with three transistors (T3) and three capacitors (CS) for each group of four elements of the valve.

This technique may of course be extended to groups of eight or sixteen valve elements, or even more.

These architectures of valve element and the associated codings are given merely by way of example.

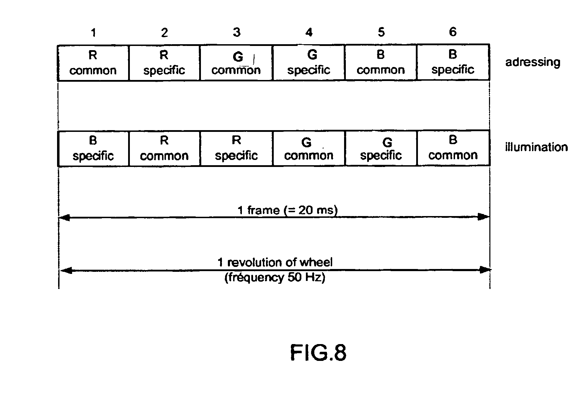

A sequencing such as shown in Figure 8 may also be envisaged. The common and specific values for one and the same colour are written one after the other into the elements of the valve. The drawback of this solution is, however, the presence of "colour break-up" at the transition between the common values and the specific values of each colour.

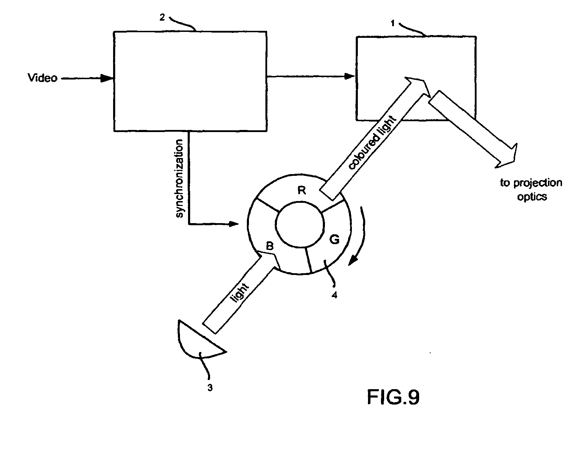

An embodiment of a display device in accordance with the invention is proposed in Figure 9. It comprises:

- a valve 1 of elements arranged in rows and columns, said elements being in accordance with the diagram of Figure 5 or 7,
- means 2 for coding, for each image, the video information intended to be displayed by each of the elements of the valve as a common value shared by a group of at least two adjacent elements of the valve and a specific value, as are described above, and for transmitting them to the valve 1,
- a light source 3 for producing white light and illuminating the valve 1, said valve reflecting or allowing through a quantity of light as a function of the specific and common values that are transmitted to it by the coding means 2, and
- a colour wheel 4, interposed between the light source 3 and the valve 1, comprising a colour segment for each of the colours, said wheel being synchronized with the coding means 2 so that, when specific or common values relating to a colour are applied to the mirror electrodes of the liquid crystals of the valve, the wheel segment corresponding to said colour filters the light produced by the source 3.

Of course, a light source producing coloured light directly may be provided in place of the white light source + colour wheel assembly.

In practice, the coding means 2 control the frequency of rotation of the colour wheel. To implement the sequencing of Figure 6, the frequency of rotation of the wheel is doubled with respect to the image frequency (2 wheel revolutions at each image). In the case of Figure 8, the frequency of rotation of the wheel is equal to the image frequency.

The light thus transmitted by the valve 1 is then redirected towards a screen by an optical device.

**Claims**

1. Image display device comprising:

   - a valve (1) of elements arranged in rows and columns, each of said elements comprising a liquid crystal one of whose electrodes (E), called the mirror electrode, is controlled by drive means so as to display video information relating to at least one image,
   - means (2) for coding, for each image, the video information intended to be displayed by each of the elements of the valve as a common value shared by a group of at least two adjacent elements of the valve and a specific value, and for transmitting them to said valve (1),

   **characterized in that** said drive means consist in:

   - for each element of the valve, a specific drive means coupled to the mirror electrode (E) of the liquid crystal of said element and intended to store the specific value associated with the video information item to be displayed by said element and to apply it to the mirror electrode of the liquid crystal of said element and
   - for each group of at least two elements of the valve, a common drive means coupled to each element of said group and intended to store said common value associated with the video information item to be displayed by said elements of the group and to apply it to the mirror electrode (E) of the liquid crystals of the elements of said group,
   the specific drive means and the common drive means that are coupled to one and the same group of elements controlling the liquid crystals of the elements of the group in such a way as to alternately display the specific values and the common value of the video information relating to the elements of the group for an image.

2. Display device according to Claim 1, **characterized in that** it is able to process video information relating to at least two colours transmitted sequentially,
   and **in that** the specific drive means and the common drive means that are coupled to one and the same group of elements control the liquid crystals of the elements of the group in such a way as to alternately display the specific values of the video information relating to a colour and the common values of the video information relating to said colour or to another colour.

3. Device according to claim 2, **characterized in that** it furthermore comprises:

   - a light source (3) for producing white light and illuminating said valve of elements (1), said valve reflecting or allowing through a quantity of light as a function of the specific and common values that are transmitted to it by the coding means (2), and
   - a colour wheel (4), interposed between said light source (3) and said valve (1), comprising a colour segment for each of said at least two colours, said wheel being synchronized with the coding means (2) so that, when specific or common values relating to a colour are applied to the mirror electrodes (E) of the liquid crystals of the valve, the wheel segment corresponding to said colour filters the light produced by the source.

4. Device according to one of Claims 1 to 3, **characterized in that** the adjacent elements of said group belong to consecutive rows and to a column of elements of the valve.

5. Device according to one of Claims 1 to 3, **characterized in that** the adjacent elements of said group belong to consecutive rows and to consecutive columns of elements of the valve.

6. Device according to one of Claims 1 to 5, **characterized in that** the specific drive means of an element comprises:

   - a first storage capacitor (CS1, CS1', CS1", CS1''') for storing the specific values present on a column line of the valve and intended for said element,
   - a first switch (T1; T1'; T1" T1''') for connecting the column line (11) to a first end of said first storage capacitor (CS1, CS1', CS1", CS1'''), the other end being connected to a fixed potential, and
   - a second switch (T2, T2', T2", T2''') for connecting the first end of the first storage capacitor to the mirror electrode (E) of the liquid crystal of the element.

7. Device according to one of Claims 1 to 6, **characterized in that** the common drive means of a group of elements of the valve comprises:

- a second storage capacitor (CS2) for storing the common value present on the column line of the valve and intended for said group,
- a third switch (T3) for connecting the column line (11) to a first end of the second storage capacitor (CS2), the other end being connected to a fixed potential, and
- fourth switches (T4, T4', T4'', T4''') for connecting the first end of the second storage capacitor to the mirror electrodes (E) of the liquid crystals of the elements of the group.

8. Device according to one of the preceding claims, **characterized in that** the groups of elements comprise two elements.

9. Device according to one of Claims 1 to 7, **characterized in that** the groups of elements comprise four elements.


**Patentansprüche**

1. Bildanzeigevorrichtung, die umfasst:

- ein Ventil (1) von Elementen, die in Zeilen und Spalten angeordnet sind, wobei jedes der Elemente einen Flüssigkristall umfasst, dessen eine Elektrode (E), die die Spiegelelektrode genannt wird, durch Ansteuermittel in der Weise gesteuert wird, dass Videoinformationen in Bezug auf mindestens ein Bild angezeigt werden,
- Mittel (2), um für jedes Bild die Videoinformationen, die durch jedes der Elemente des Ventils angezeigt werden sollen, als einen gemeinsamen Wert, der von einer Gruppe von mindestens zwei angrenzenden Elementen des Ventils gemeinsam genutzt wird, und als einen spezifischen Wert zu codieren und sie an das Ventil (1) zu übertragen,

**dadurch gekennzeichnet, dass** die Ansteuermittel in Folgendem bestehen:

- für jedes Element des Ventils aus einem spezifischen Ansteuermittel, das mit der Spiegelelektrode (E) des Flüssigkristalls des Elements gekoppelt ist und den spezifischen Wert speichern soll, der der Videoinformationseinheit zugeordnet ist, die durch das Element angezeigt werden soll, und um ihn an die Spiegelelektrode des Flüssigkristalls des Elements anzulegen, und
- für jede Gruppe von mindestens zwei Elementen des Ventils aus einem gemeinsamen Ansteuermittel, das mit jedem Element der Gruppe gekoppelt ist und den gemeinsamen Wert speichern soll, der der Videoinformationseinheit zugeordnet ist, die durch die Elemente der Gruppe angezeigt werden soll, und um ihn an die Spiegelelektrode (E) der Flüssigkristalle der Elemente der Gruppe anzulegen,

wobei die spezifischen Ansteuermittel und die gemeinsamen Ansteuermittel, die mit ein und derselben Gruppe von Elementen gekoppelt sind, die Flüssigkristalle der Elemente der Gruppe in der Weise steuern, dass abwechselnd die spezifischen Werte und der gemeinsame Wert der Videoinformationen in Bezug auf die Elemente der Gruppe für ein Bild angezeigt werden.

2. Anzeigevorrichtung nach Anspruch 1, **dadurch gekennzeichnet, dass** sie Videoinformationen in Bezug auf mindestens zwei nacheinander übertragene Farben verarbeiten kann, und **dadurch**, dass die spezifischen Ansteuermittel und die gemeinsamen Ansteuermittel, die mit ein und derselben Gruppe von Elementen gekoppelt sind, die Flüssigkristalle der Elemente der Gruppe in der Weise steuern, dass abwechselnd die spezifischen Werte der Videoinformationen in Bezug auf eine Farbe und die gemeinsamen Werte der Videoinformationen in Bezug auf diese Farbe oder auf eine andere Farbe angezeigt werden.

3. Vorrichtung nach Anspruch 2, **dadurch gekennzeichnet, dass** sie darüber hinaus umfasst:

- eine Lichtquelle (3) zum Erzeugen von weißem Licht und zum Beleuchten des Ventils von Elementen (1),

wobei das Ventil eine Lichtmenge in Abhängigkeit von den spezifischen und gemeinsamen Werten, die an es durch die Codierungsmittel (2) übertragen werden, reflektiert oder durchlässt, und

- ein Farbrad (4), das zwischen der Lichtquelle (3) und dem Ventil (1) liegt, das für jede der mindestens zwei Farben ein Farbsegment umfasst, wobei das Rad in der Weise mit den Codierungsmitteln (2) synchronisiert ist, dass dann, wenn an die Spiegelelektroden (E) der Flüssigkristalle des Ventils spezifische oder gemeinsame Werte angelegt werden, die sich auf eine Farbe beziehen, das Radsegment, das dieser Farbe entspricht, das durch die Quelle erzeugte Licht filtert.

4. Vorrichtung nach einem der Ansprüche 1 bis 3, **dadurch gekennzeichnet, dass** die angrenzenden Elemente der Gruppe zu aufeinanderfolgenden Zeilen und zu einer Spalte von Elementen des Ventils gehören.

5. Vorrichtung nach einem der Ansprüche 1 bis 3, **dadurch gekennzeichnet, dass** die angrenzenden Elemente der Gruppe zu aufeinanderfolgenden Zeilen und zu aufeinanderfolgenden Spalten der Elemente des Ventils gehören.

6. Vorrichtung nach einem der Ansprüche 1 bis 5, **dadurch gekennzeichnet, dass** das spezifische Ansteuermittel eines Elements umfasst:

   - einen ersten Speicherkondensator (CS1, CS1', CS1", CS''') zum Speichern der spezifischen Werte, die an einer Spaltenleitung des Ventils vorliegen und für das Element bestimmt sind,
   - einen ersten Schalter (T1, T1', T1", T1''') zum Verbinden der Spaltenleitung (11) mit einem ersten Ende des ersten Speicherkondensators (CS1, CS1', CS1", CS'''), wobei das andere Ende mit einem festen Potential verbunden ist, und
   - einen zweiten Schalter (T2, T2', T2", T2''') zum Verbinden des ersten Endes des ersten Speicherkondensators mit einer Spiegelelektrode (E) des Flüssigkristalls des Elements.

7. Vorrichtung nach einem der Ansprüche 1 bis 6, **dadurch gekennzeichnet, dass** das gemeinsame Ansteuermittel einer Gruppe von Elementen des Ventils umfasst:

   - einen zweiten Speicherkondensator (CS2) zum Speichern des gemeinsamen Werts, der an der Spaltenleitung des Ventils vorliegt und für die Gruppe bestimmt ist,
   - einen dritten Schalter (T3) zum Verbinden der Spaltenleitung (11) mit einem ersten Ende des zweiten Speicherkondensators (CS2), wobei das andere Ende mit einem festen Potential verbunden ist, und
   - vierte Schalter (T4, T4', T4", T4''') zum Verbinden des ersten Endes des zweiten Speicherkondensators mit den Spiegelelektroden (E) der Flüssigkristalle der Elemente der Gruppe.

8. Vorrichtung nach einem der vorhergehenden Ansprüche,
   **dadurch gekennzeichnet, dass** die Gruppen von Elementen zwei Elemente umfassen.

9. Vorrichtung nach einem der Ansprüche 1 bis 7, **dadurch gekennzeichnet, dass** die Gruppen von Elementen vier Elemente umfassen.

**Revendications**

1. Dispositif d'affichage d'image comprenant :

   - une valve (1) d'éléments organisés en rangées et en colonnes, chacun desdits éléments comportant un cristal liquide dont l'une des électrodes (E), appelée électrode miroir, est pilotée par des moyens de commande pour afficher des informations vidéo relatives à au moins une image,
   - des moyens (2) pour coder, pour chaque image, les informations vidéo destinées à être affichées par chacun des éléments de la valve en une valeur commune à un groupe d'au moins deux éléments adjacents de la valve et une valeur spécifique, et les transmettre à ladite valve (1),

   **caractérisé en ce que** lesdits moyens de commande consistent en:

   - pour chaque élément de la valve, un moyen de commande spécifique couplé à l'électrode miroir (E) du cristal liquide dudit élément et destiné à stocker la valeur spécifique associée à l'information vidéo à afficher par ledit élément et à l'appliquer à l'électrode miroir du cristal liquide dudit élément, et
   - pour chaque groupe d'au moins deux éléments de la valve, un moyen de commande commun couplé à chaque élément dudit groupe et destiné à stocker ladite valeur commune associée à l'information vidéo à afficher par lesdits éléments du groupe et à l'appliquer à l'électrode miroir (E) des cristaux liquides des éléments dudit groupe, les moyens de commande spécifiques et le moyen de commande commun couplés à un même groupe d'éléments pilotant les cristaux liquides des éléments du groupe de façon à afficher alternativement les valeurs spécifiques et la valeur commune des informations vidéo se rapportant aux éléments du groupe pour une image.

**2.** Dispositif d'affichage selon la revendication 1 **caractérisé en ce qu'**il est apte à traiter des informations vidéo se rapportant à au moins deux couleurs transmises séquentiellement,
et **en ce que** les moyens de commande spécifiques et le moyen de commande commun couplés à un même groupe d'éléments pilotent les cristaux liquides des éléments du groupe de façon à afficher en alternance les valeurs spécifiques des informations vidéo se rapportant à une couleur et les valeurs communes des informations vidéo se rapportant à ladite couleur ou à une autre couleur.

**3.** Dispositif selon la revendication 2, **caractérisé en ce qu'**il comporte en outre :

- une source de lumière (3) pour produire de la lumière blanche et illuminer ladite valve d'éléments (1), ladite valve réfléchissant ou laissant passer une quantité de lumière en fonction des valeurs spécifiques et communes qui lui sont transmises par les moyens de codage (2), et
- une roue de couleur (4), intercalée entre ladite source de lumière (3) et ladite valve (1), comportant un segment de couleur pour chacune desdites au moins deux couleurs, ladite roue étant synchronisée sur les moyens de codage (2) pour que, lorsque des valeurs spécifiques ou communes relatives à une couleur sont appliquées sur les électrodes miroir (E) des cristaux liquides de la valve, le segment de roue correspondant à ladite couleur filtre la lumière produite par la source.

**4.** Dispositif selon l'une des revendications 1 à 3, **caractérisé en ce que** les éléments adjacents dudit groupe appartiennent à des rangées consécutives et à une colonne d'éléments de la valve.

**5.** Dispositif selon l'une des revendications 1 à 3, **caractérisé en ce que** les éléments adjacents dudit groupe appartiennent à des rangées consécutives et à des colonnes consécutives d'éléments de la valve.

**6.** Dispositif selon l'une des revendications 1 à 5, **caractérisé en ce que** le moyen de commande spécifique d'un élément comporte :

- une première capacité de stockage (CS1, CS1', CS1", CS1''') pour stocker les valeurs spécifiques présentes sur une ligne de colonne de la valve et destinées audit élément,
- un premier interrupteur (T1; T1', T1", T1''') pour connecter la ligne de colonne (11) à une première extrémité de ladite première capacité de stockage (CS1, CS1', CS1", CS1'''), l'autre extrémité étant connectée à un potentiel fixe, et
- un deuxième interrupteur (T2, T2', T2", T2''') pour connecter la première extrémité de la première capacité de stockage à l'électrode miroir (E) du cristal liquide de l'élément.

**7.** Dispositif selon l'une des revendications 1 à 6, **caractérisé en ce que** le moyen de commande commun d'un groupe d'éléments de la valve comporte :

- une deuxième capacité de stockage (CS2) pour stocker la valeur commune présente sur la ligne de colonne de la valve et destinée audit groupe,
- un troisième interrupteur (T3) pour connecter la ligne de colonne (11) à une première extrémité de la deuxième capacité de stockage (CS2), l'autre extrémité étant connectée à un potentiel fixe, et
- des quatrièmes interrupteurs (T4, T4', T4", T4''') pour connecter la première extrémité de la deuxième capacité de stockage aux électrodes miroir (E) des cristaux liquides des éléments du groupe.

**8.** Dispositif selon l'une des revendications précédentes, **caractérisé en ce que** les groupes d'éléments comprennent deux éléments.

**9.** Dispositif selon l'une des revendications 1 à 7, **caractérisé en ce que** les groupes d'éléments comprennent quatre éléments.

FIG.1
(prior art)

FIG.2
(prior art)

FIG.3
(prior art)

FIG.4
(prior art)

FIG.5

| 1 | 2 | 3 | 4 | 5 | 6 | |
|---|---|---|---|---|---|---|
| G common | B specific | R common | G specific | B common | R specific | adressing |
| R specific | G common | B specific | R common | G specific | B common | illumination |

1st revolution of wheel ← → 2nd revolution of wheel

1 frame (=20ms)

FIG.6

FIG.7

| 1 | 2 | 3 | 4 | 5 | 6 | |
|---|---|---|---|---|---|---|
| R common | R specific | G common | G specific | B common | B specific | adressing |
| | | | | | | |
| B specific | R common | R specific | G common | G specific | B common | illumination |

1 frame (= 20 ms)

1 revolution of wheel
(fréquency 50 Hz)

FIG.8

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6476785 B
- US 20030030609 A
- EP 0631271 A
- EP 1207513 A
- US 20030090448 A
- FR 2841366